# EUROPÄISCHE PATENTSCHRIFT

(11) **EP 1 618 166 B1**
(45) Veröffentlichungstag und Bekanntmachung des Hinweises auf die Patenterteilung: **28.07.2010**
(21) Anmeldenummer: 04727282.8
(22) Anmeldetag: 14.04.2004
(51) Int. Cl.: C09K 5/10, B01J 13/00, C09K 5/06

(54) **VERWENDUNG VON WÄSSRIGEN MIKROKAPSELDISPERSIONEN ALS WÄRMETRÄGERFLÜSSIGKEITEN**
USE OF AQUEOUS MICROCAPSULE DISPERSIONS AS HEAT TRANSFER LIQUIDS
UTILISATION DE DISPERSIONS AQUEUSES EN MICROCAPSULES EN TANT QUE LIQUIDES CALOPORTEURS

(30) Priorität: 17.04.2003 DE 10318044
(43) Veröffentlichungstag der Anmeldung: 25.01.2006
(73) Patentinhaber: BASF SE, 67056 Ludwigshafen (DE)
(72) Erfinder: JAHNS, Ekkehard, 69469 Weinheim (DE)
(86) Internationale Anmeldenummer: PCT/EP2004/003959
(87) Internationale Veröffentlichungsnummer: WO 2004/092299

(56) Entgegenhaltungen:
- DE-A- 19 654 035
- DE-A- 19 749 731
- US-A- 4 911 232
- US-A- 5 007 478
- US-B1- 6 284 158
- DATABASE WPI Section Ch, Week 199541 Derwent Publications Ltd., London, GB; Class A14, AN 1995-316113 XP002293566 & JP 07 213890 A (MITSUBISHI JUKOGYO KK) 15. August 1995 (1995-08-15)

## Beschreibung

Die vorliegende Erfindung betrifft die Verwendung von wässrigen Mikrokapseldispersionen mit Latentwärmespeichermaterialien als Kapselkern als Wärmeträgerflüssigkeiten sowie die sie enthaltenden Wärmetauschersysteme.

Ein wichtiges Forschungsziel ist die Senkung des Energiebedarfs und Nutzung von vorhandener Wärmeenergie. Hierunter gilt ein besonderes Augenmerk der Verbesserung energieintensiver Systeme wie Heizungs- und Kühlsysteme, die oftmals einen unbefriedigenden Wirkungsgrad haben. Ein Ansatz zur Lösung dieses Problems ist, die Wärmespeicherkapazität des flüssigen Wärmeträgermediums durch den Zusatz von Latentwärmespeichermaterialien zu erhöhen. So kann man mit weniger Pumpenenergie und/oder geringeren Rohrquerschnitten und kleineren Wärmetauschern eine größere Menge an Energie transportieren. Ein weiterer Vorteil ist die erhöhte Wärmespeichermöglichkeit im Gesamtsystem aus Rohrleitungen und Wärmetauschern, so dass häufig auf weitere Speichermöglichkeiten, wie zusätzliche Behälter oder Tanks verzichtet werden kann.

Die Funktionsweise von Latentwärmespeichermaterialien beruht auf der beim fest/flüssig-Phasenübergang auftretenden Umwandlungsenthalpie, die eine Energieaufnahme oder Energieabgabe an die Umgebung bedeutet.

Bei Heizungs- und Kühlsystemen, in denen Wärme von einer Wärmeträgerflüssigkeit aufgenommen bzw. abgegeben wird, unterscheidet man grundsätzlich zwischen dynamischen Systemen und statischen Systemen. In den dynamischen Systemen wird von einer Wärmequelle Wärmeenergie mittels einer Wärme-aufnehmenden Vorrichtung zunächst auf die Wärmeträgerflüssigkeit übertragen. Diese wird dann in eine Vorrichtung zur Wärmeabgabe transportiert, wo die Wärme von einem Wärmeabnehmer, beispielsweise der Umgebung, aufgenommen wird. Die Wärmeträgerflüssigkeit wird dann zurück in die Wärme-aufnehmende Vorrichtung transportiert. In den statischen Systemen wird die Wärme an ein Wärmereservoir abgegeben, welches die aufgenommene Wärme dann zeitlich verzögert an einen Wärmeabnehmer abgibt. Wärmeträgerflüssigkeiten in statischen Systemen werden oftmals auch als Wärmespeicherflüssigkeiten bezeichnet.

In derartigen Wärmeträgerflüssigkeiten mit Latentwärmespeichern liegen diese in der Regel in disperser Form vor, d.h. die Latentwärmespeicher sind in der Flüssigkeit suspendiert. Es ist dabei zu berücksichtigen, dass man auf der einen Seite möglichst große Mengen Latentwärmespeichermaterial suspendiert haben möchte, um eine erhöhte Wärmekapazität zu erzielen. Auf der anderen Seite verringert eine erhöhte Konzentration an Latentwärmespeichermaterialien die Pumpbarkeit der Suspension, weil die Viskosität der Suspension bei erhöhtem Gehalt an Latentwärmespeichermaterial stark ansteigt. Nicht selten sind solche Suspensionen auch instabil und es kommt zu Entmischungen.

Die US 5,007,478 beschreibt Kühlelemente, bei denen Mikrokapselsuspensionen mit Latentwärmespeichermaterialien von einem Behälter umschlossen sind. Als Kapselmaterialien werden Polyvinylalkohol und Polystyrol vorgeschlagen.

Die US 4,911,232 lehrt Wärmeträgerflüssigkeiten für Wärmetauscher, die Suspensionen aus einer Flüssigkeit und mikroverkapselten Latentwärmespeichermaterialien sind. Als Wandmaterial für die Mikrokapseln werden allgemein Polymere genannt.

Die US 6,284,158 beschreibt die Verwendung von Latentwärmespeichermaterialien, die in porösen Polymeren wie Acrylatcopolymeren absorbiert sind und dann in Wärmeträgerflüssigkeiten eingesetzt werden. Nachteilig ist, dass die poröse Struktur die Latentwärmespeichermaterialien wieder freisetzt.

Die DE-A-196 54 035 lehrt Mikrokapseldispersionen mit Latentwärmespeichermaterialien als Kapselkern als fluide Wärmeträgermedien. Die Wärmeträgerflüssigkeit enthält Mikrokapseln mit einer Wand aus Melaminharzpartikeln. Als mögliches Wandmaterial wird neben anderem auch Polymethylmethacrylat genannt. Melaminharzpartikel haben jedoch den Nachteil, auf die Dauer nicht ausreichend hydrolysestabil zu sein.

Die JP 07-213890 lehrt Mikrokapseln, mit einem inneren Film aus Polymethylmethacrylat und einem äußeren Film aus aromatischem Polyamid. Diese Kapseln eignen sich als fluides Wärmeträgermedium.

Die DE 197 49 731 betrifft die Verwendung von Mikrokapseln mit Wänden auf Methacrylatbasis zur Modifizierung mineralischer Bindebaustoffe, polymerer Formkörper und polymerer Beschichtungsmassen.

Der vorliegenden Erfindung lag daher die Bereitstellung von Wärmeträgerflüssigkeiten, welche die Nachteile des Standes der Technik nicht aufweisen, als Aufgabe zugrunde.

Demgemäß wurde die Verwendung von wässrigen Mikrokapseldispersionen mit Latentwärmespeichermaterialien als Kapselkern und einem Polymer als Schale, die erhältlich sind durch Erwärmen einer Öl-in-Wasser-Emulsion, in der die Monomere, Radikalstarter und die Latentwärmespeichermaterialien als disperse Phase vorliegen, wobei die Monomermischung
- 30 bis 95 Gew.-%, bezogen auf das Gesamtgewicht der Monomeren, eines oder mehrerer Monomere I ausgewählt unter den C₁-C₂₄-Alkylestern der Acryl-und Methacrylsäure, Methacrylsäure und Methacrylnitril,
- 5 bis 60 Gew.-%, bezogen auf das Gesamtgewicht der Monomeren, eines oder mehrerer bi- oder polyfunktionellen Monomeren II, welches in Wasser nicht löslich oder schwer löslich ist und
- 0 bis 40 Gew.-%, bezogen auf das Gesamtgewicht der Monomeren, sonstige Monomere III enthält,
als Wärmeträgerflüssigkeiten gefunden.

Die in den erfindungsgemäß verwendeten Dispersionen enthaltenen Mikrokapseln sind Teilchen mit einem Kapselkern, der überwiegend, in der Regel zu mehr als 95 Gew.-%, aus Latentwärmespeichermaterialien besteht, und einem Polymer als Kapselwand. Der Kapselkern ist dabei je nach Temperatur fest oder flüssig. Die mittlere Teilchengröße der Kapseln (Z-Mittel mittels Lichtstreuung) beträgt 0,5 bis 100 µm, bevorzugt 1 bis 50 µm, besonders bevorzugt 1 bis 6 µm. Wenn die Mikrokapseldispersionen als Wärmeträgerflüssigkeiten in dynamischen Systemen eingesetzt werden, wird eine mittlere Teilchengröße der Kapseln von 1 bis 10 µm, insbesondere 1 bis 6 µm bevorzugt. Das Gewichtsverhältnis von Kapselkern zu Kapselwand beträgt im allgemeinen von 50:50 bis 95:5. Bevorzugt wird ein Kern/Wand-Verhältnis von 70:30 bis 90:10.

Latentwärmespeichermaterialien sind definitionsgemäß Substanzen, die in dem Temperaturbereich, in welchem eine Wärmeübertragung vorgenommen werden soll, einen Phasenübergang aufweisen. Vorzugsweise weisen die Latentwärmespeicher einen fest/flüssig-Phasenübergang im Bereich von -20°C bis 120°C auf. In der Regel handelt es sich bei den Latentwärmespeichern um organische, bevorzugt lipophile Substanzen.

Als geeignete Substanzen sind beispielhaft zu nennen:
- aliphatische Kohlenwasserstoffverbindungen wie gesättigte oder ungesättigte C₁₀-C₄₀-Kohlenwasserstoffe, die verzweigt oder bevorzugt linear sind, z.B. wie n-Tetradecan, n-Pentadecan, n-Hexadecan, n-Heptadecan, n-Octadecan, n-Nonadecan, n-Eicosan, n-Heneicosan, n-Docosan, n-Tricosan, n-Tetracosan, n-Pentacosan, n-Hexacosan, n-Heptacosan, n-Octacosan sowie cyclische Kohlenwasserstoffe, z.B. Cyclohexan, Cyclooctan, Cyclodecan;
- aromatische Kohlenwasserstoffverbindungen wie Benzol, Naphthalin, Biphenyl, o- oder n-Terphenyl, C₁-C₄₀-alkylsubstituierte aromatische Kohlenwasserstoffe wie Dodecylbenzol, Tetradecylbenzol, Hexadecylbenzol, Hexylnaphthalin oder Decylnaphthalin;
- gesättigte oder ungesättigte C₆-C₃₀-Fettsäuren wie Laurin-, Stearin-, Öl- oder Behensäure, bevorzugt eutektische Gemische aus Decansäure mit z.B. Myristin-, Palmitin- oder Laurinsäure;
- Fettalkohole wie Lauryl-, Stearyl-, Oleyl-, Myristyl-, Cetylalkohol, Gemische wie Kokosfettalkohol sowie die sogenannten Oxoalkohole, die man durch Hydroformylierung von α-Olefinen und weiteren Umsetzungen erhält;
- C₆-C₃₀-Fettamine, wie Decylamin, Dodecylamin, Tetradecylamin oder Hexadecylamin;
- Ester wie C₁-C₁₀-Alkylester von Fettsäuren wie Propylpalmitat, Methylstearat oder Methylpalmitat sowie bevorzugt ihre eutektischen Gemische oder Methylcinnamat;
- natürliche und synthetische Wachse wie Montansäurewachse, Montanesterwachse, Carnaubawachs, Polyethylenwachs, oxidierte Wachse, Polyvinyletherwachs, Ethylenvinylacetatwachs oder Hartwachse nach Fischer-Tropsch-Verfahren;
- halogenierte Kohlenwasserstoffe wie Chlorparaffin, Bromoctadecan, Brompentadecan, Bromnonadecan, Bromeicosan, Bromdocosan.

Weiterhin sind Mischungen dieser Substanzen geeignet, solange es nicht zu einer Gefrierpunktserniedrigung außerhalb des gewünschten Bereichs kommt, oder die Schmelzwärme der Mischung für eine sinnvolle Anwendung zu gering wird.

Vorteilhaft ist beispielsweise die Verwendung von reinen n-Alkanen, n-Alkanen mit einer Reinheit von größer als 80% oder von Alkangemischen, wie sie als technisches Destillat anfallen und als solche handelsüblich sind.

Ferner können die obengenannten halogenierten Kohlenwasserstoffe als Flammschutzmittel beigemischt werden. Es können auch Flammschutzmittel wie Decabromdiphenyloxid, Octabromdiphenyloxid, Antimonoxid oder in der US-A 4 797 160 beschriebene Flammschutzadditive zugesetzt werden. Sie werden in Mengen von 1 bis 30 Gew.-% bezogen auf den Kapselkern zugesetzt.

Weiterhin ist es vorteilhaft, den Latentwärmespeichermaterialien in ihnen lösliche Verbindungen zuzugeben, um so die zum Teil bei den unpolaren Substanzen auftretende Gefrierpunktserniedrigung zu verhindern. Vorteilhaft verwendet man, wie in der USA 5 456 852 beschrieben, Verbindungen mit einem 20 bis 120°C höheren Schmelzpunkt als die eigentliche Kemsubstanz. Geeignete Verbindungen sind die oben als lipophile Substanzen erwähnten Fettsäuren, Fettalkohole, Fettamide sowie aliphatische Kohlenwasserstoffverbindungen, wie n-Alkane. Sie werden in Mengen von 0,1 bis 10 Gew.-% bezogen auf den Kapselkern zugesetzt.

Je nach Temperaturbereich, in dem die Wärmespeicher gewünscht sind, werden die lipophilen Substanzen gewählt. Beispielsweise verwendet man für Kühlzwecke bevorzugt lipophile Substanzen, deren fest/flüssig-Phasenübergang im Temperaturbereich von -20 bis 20°C liegt. So wählt man in der Regel für die Anwendung in Klimanlagen Einzelstoffe oder Mischungen mit Umwandlungsstemperaturen von 4°C bis 20°C. Für den Transport oder die Speicherung von Niedertemperaturwärme für Heizungszwecke verwendet man Einzelstoffe oder Mischungen mit Umwandlungstemperaturen von 15°C bis 60°C und für Heizungsanlagen für den Transport oder die Speicherung von Wärme Einzelstoffe oder Mischungen mit Umwandlungstemperaturen von 50°C bis 120°C. Unter den Begriff Niedertemperaturwärme und Heizungsanlagen fallen auch Solaranwendungen, die ganz ähnliche Speicher- und Transportaufgaben haben.

In den erfindungsgemäßen Mikrokapseln sind die Schalen-bildenden Polymere aus 30 bis 95 Gew.% insbesondere 50 bis 90 Gew.-% eines oder mehrerer C₁-C₂₄-Alkylester der Acryl- und Methacrylsäure, Methacrylsäure und Methacrylnitril als Monomere I aufgebaut. Außerdem können die Polymere 5 bis 60 Gew.%, insbesondere 10 bis 50 Gew.-%, eines oder mehrerer bi- oder polyfunktionelle Monomere II, welche in Wasser nicht löslich oder schwer löslich sind, einpolymerisiert enthalten. Daneben können die Polymere bis zu 40 Gew.-%, vorzugsweise bis zu 30 Gew.-% sonstige Monomere III einpolymerisiert enthalten.

Bevorzugt werden Mikrokapseln, deren Kapselwand ein hochvernetztes Methacrylsäureesterpolymer ist. Der Vernetzungsgrad wird dabei mit einem Vernetzeranteil (Monomere II) ≥10 Gew.-% bezogen auf das Gesamtpolymer erzielt.

Als Monomere I eignen sich insbesondere C₁-C₁₂-Alkylester der Acryl- und/oder Methacrylsäure. Besonders bevorzugte Monomere I sind Methyl-, Ethyl-, n-Propyl- und n-Butylacrylat und/oder die entsprechenden Methacrylate. Bevorzugt sind iso-Propyl-, iso-Butyl-, sec.-Butyl- und tert.-Butylacrylat und die entsprechenden Methacrylate. Ferner sind Methacrylnitril und Methacrylsäure zu nennen. Generell werden die Methacrylate bevorzugt.

Geeignete Monomere II sind bi- oder polyfunktionelle Monomere, welche in Wasser nicht löslich oder schwer löslich sind, aber eine gute bis begrenzte Löslichkeit in der lipophilen Substanz haben. Unter Schwerlöslichkeit ist eine Löslichkeit kleiner 60 g/l bei 20°C zu verstehen.

Unter bi- oder polyfunktionellen Monomeren versteht man Verbindungen, die wenigstens zwei nichtkonjugierte ethylenische Doppelbindungen haben.Vornehmlich kommen Divinyl- und Polyvinylmonomere in Betracht, die eine Vernetzung der Kapselwand während der Polymerisation bewirken.

Bevorzugte bifunktionelle Monomere sind die Diester von Diolen mit Acrylsäure oder Methacrylsäure, ferner die Diallyl- und Divinylether dieser Diole.

Bevorzugte Divinylmonomere sind Ethandioldiacrylat, Divinylbenzol, Ethylenglykoldimethacrylat, 1,3-Butylenglykoldimethacrylat, Methallylmethacrylamid und Allylmethacrylat. Besonders bevorzugt sind Propandiol-, Butandiol-, Pentandiol- und Hexandioldiacrylat oder die entsprechenden Methacrylate.

Bevorzugte Polyvinylmonomere sind Trimethylolpropantriacrylat und -methacrylat, Pentaerythrittriallylether und Pentaerythrittetraacrylat.

Als sonstige Monomere III kommen von den Monomeren I verschiedene monoethylenisch ungesättigte Monomere in Betracht, bevorzugt sind Monomere IIIa wie Styrol, α-Methylstyrol, α-Methylstyrol, Vinylacetat, Vinylpropionat und Vinylpyridin.

Besonders bevorzugt sind die wasserlöslichen Monomere IIIb, z.B. Acrylnitril, Acrylamid, Methacrylamid, Acrylsäure, Itaconsäure, Maleinsäure, Maleinsäureanhydrid, N-Vinylpyrrolidon, 2-Hydroxyethylacrylat und -methacrylat und Acrylamido-2-methylpropansulfonsäure. Daneben sind insbesondere N-Methylolacrylamid, N-Methylolmethacrylamid, Dimethylaminoethylmethacrylat und Diethylaminoethylmethacrylat zu nennen.

Die zur erfindungsgemäßen Verwendung geeigneten Mikrokapseln lassen sich durch eine sogenannte in-situ-Polymerisation herstellen.

Die bevorzugten Mikrokapseln sowie ihre Herstellung sind aus der EP-A-457 154 bekannt, auf die ausdrücklich verwiesen wird. So stellt man die Mikrokapseln in der Weise her, dass man aus den Monomeren, einem Radikalstarter, einem Schutzkolloid und der einzukapselnden lipophilen Substanz eine stabile Öl-in-Wasser-Emulsion herstellt, in der sie als disperse Phase vorliegen. Der Anteil der Ölphase in der Öl-in-Wasser-Emulsion liegt vorzugsweise bei 20 bis 60 Gew.-%.

Anschließend löst man die Polymerisation der Monomeren durch Erwärmung aus, wobei die entstehenden Polymere die Kapselwand bilden, welche die lipophile Substanz umschließt.

In der Regel führt man die Polymerisation bei 20 bis 100°C, vorzugsweise bei 40 bis 80°C durch. Natürlich sollte die Dispersions- und Polymerisationstemperatur oberhalb der Schmelztemperatur der lipophilen Substanzen liegen, so dass man gegebenenfalls Radikalstarter wählt, deren Zerfallstemperatur oberhalb des Schmelzpunkts der lipophilen Substanz liegt.

Die Reaktionszeiten der Polymerisation betragen normalerweise 1 bis 10 Stunden, meistens 2 bis 5 Stunden.

Verfahrenstechnisch geht man in der Regel so vor, dass man eine Mischung aus Wasser, Monomeren, Schutzkolloiden, den lipophilen Substanzen, Radikalstartern und gegebenenfalls Reglern nacheinander oder gleichzeitig dispergiert und unter intensivem Rühren auf die Zerfallstemperatur der Radikalstarter erhitzt. Die Geschwindigkeit der Polymerisation kann dabei durch Wahl der Temperatur und die Menge des Radikalstarters gesteuert werden. Zweckmäßigerweise startet man die Reaktion durch Temperaturerhöhung auf eine Anfangstemperatur und steuert die Polymerisation durch weitere Temperaturerhöhung.

Nach Erreichen der Endtemperatur setzt man die Polymerisation zweckmäßigerweise noch etwa für eine Zeit von bis zu 2 Stunden fort, um Restmonomerengehalte abzusenken.

Im Anschluß an die eigentliche Polymerisationsreaktion bei einem Umsatz von 90 bis 99 Gew.-% ist es in der Regel vorteilhaft, die wässrigen Mikrokapseldispersionen weitgehend frei von Geruchsträgern, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Ferner kann es chemisch geschehen, wie in der WO 9924525 beschrieben, vorteilhaft durch redoxinitierte Polymerisation, wie in der DE-A-4 435 423, DE-A-4419518 und DE-A-4435422 beschrieben.

Man erhält auf diese Weise Mikrokapseln der gewünschten mittleren Teilchengröße im Bereich von 0,5 bis 100 µm, wobei die Teilchengröße in an sich bekannter Weise über die Scherkraft, die Rührgeschwindigkeit, das Schutzkolloid und seine Konzentration eingestellt werden kann. Bevorzugte Schutzkolloide sind wasserlösliche Polymere, da diese die Oberflächenspannung des Wassers von 73 mN/m maximal auf 45 bis 70 mN/m senken und somit die Ausbildung geschlossener Kapselwände gewährleisten.

Die Mikrokapseln werden in Gegenwart wenigstens eines organischen Schutzkolloids hergestellt, das sowohl anionisch als auch neutral sein kann. Auch können anionische und nichtionische Schutzkolloide zusammen eingesetzt werden.

Organische neutrale Schutzkolloide sind Cellulosederivate wie Hydroxyethylcellulose, Carboxymethylcellulose und Methylcellulose, Polyvinylpyrrolidon, Copolymere des Vinylpyrrolidons, Gelatine, Gummiarabicum, Xanthan, Natriumalginat, Kasein, Polyethylenglykole, bevorzugt Polyvinylalkohol und partiell hydrolysierte Polyvinylacetate.

Zur Verbesserung der Stabilität der Emulsionen können anionische Schutzkolloide zugesetzt werden. Besonders wichtig ist die Mitverwendung anionischer Schutzkolloide bei einem großen Gehalt an Mikrokapseln in der Dispersion, da es ohne einen zusätzlichen ionischen Stabilisator zur Bildung von agglomerierten Mikrokapseln kommen kann. Diese Agglomerate senken die Ausbeute an nutzbaren Mikrokapseln, wenn es sich um Agglomerate kleiner Kapseln von 1 bis 3µm Durchmesser handelt, und sie erhöhen die Bruchempfindlichkeit, wenn die Agglomerate größer als etwa 10 µm sind.

Als anionische Schutzkolloide eignen sich Polymethacrylsäure, die Copolymerisate des Sulfoethylacrylats und -methacrylats, Sulfopropylacrylats und -methacrylats, des N-(Sulfoethyl)-maleinimids, der 2-Acrylamido-2-alkylsulfonsäuren, Styrolsulfonsäure sowie der Vinylsulfonsäure.

Bevorzugte anionische Schutzkolloide sind Naphthalinsulfonsäure und Naphthalinsulfonsäure-Formaldehyd-Kondensate sowie vor allem Polyacrylsäuren und Phenolsulfonsäure-Formaldehyd-Kondensate.

Die anionischen Schutzkolloide werden in der Regel in Mengen von 0,1 bis 10 Gew.-% eingesetzt, bezogen auf die Wasserphase der Emulsion.

Bevorzugt werden anorganische feste Teilchen, sogenannte Pickering-Systeme. Sie wirken wie Schutzkolloide. Sie ermöglichen eine Stabilisierung der Öl-in-Wasser-Emulsion durch sehr feine feste Partikel. Die Teilchen bleiben unter den Reaktionsbedingungen fest. Sie sind in Wasser unlöslich, aber dispergierbar sind oder in Wasser weder löslich noch dispergierbar jedoch von der lipophilen Substanz benetzbar. Mikroverkapselungen unter Einsatz solcher Pickering-Systeme sind beispielsweise in der US 3,615,972, US 4,016,110, WO 99 24525 sowie der älteren deutschen Anmeldung 101 63 162.6 beschrieben.

Ein Pickering-System kann dabei aus den festen Teilchen allein oder zusätzlich aus Hilfsstoffen bestehen, die die Dispergierbarkeit der Partikel in Wasser oder die Benetzbarkeit der Partikel durch die lipophile Phase verbessern. Diese Hilfsmittel sind z.B. nichtionische, anionische, kationische oder zwitterionische Tenside oder polymere Schutzkolloide, wie sie oben oder unten beschrieben sind. Zusätzlich können Puffersubstanzen zugefügt werden, um bestimmte, jeweils vorteilhafte pH-Werte der Wasserphase einzustellen. Dies kann die Wasserlöslichkeit der feinen Partikel verringern und die Stabilität der Emulsion erhöhen. Übliche Pufferstubstanzen sind Phosphatpuffer, Acetatpuffer und Citratpuffer.

Die anorganischen festen Partikel können Metallsalze sein, wie Salze, Oxide und Hydroxide von Calcium, Magnesium, Eisen, Zink, Nickel, Titan, Aluminium, Silicium, Barium und Mangan. Zu nennen sind Magnesiumhydroxid, Magnesiumcarbonat, Magnesiumoxid, Calciumoxalat, Calciumcarbonat, Bariumcarbonat, Bariumsulfat, Titandioxid, Aluminiumoxid, Aluminiumhydroxid und Zinksulfid. Silikate, Bentonit, Hydroxyapatit und Hydrotalcite seien ebenfalls genannt. Besonders bevorzugt sind hochdisperse Kieselsäuren, Magnesiumpyrophosphat und Tricalciumphosphat.

Bevorzugt werden anorganische feste Teilchen einer mittleren Größe von 5 bis 1000 nm, vorzugsweise 5 bis 500 nm, insbesondere 7 bis 200 nm. Die Größenangaben beziehen sich auf das z-Mittel der eingesetzten Kolloiddispersion bestimmt mittels Lichtstreuung.

Die Pickering-Systeme können sowohl zuerst in die Wasserphase gegeben werden, als auch zu der gerührten Emulsion von Öl-in-Wasser zugegeben werden. Manche feinen, festen Partikel werden durch eine Fällung hergestellt. So wird das Magnesiumpyrophosphat durch Zusammengeben der wässrigen Lösungen von Natriumpyrophosphat und Magnesiumsulfat hergestellt.

In der Regel wird das Pyrophosphat unmittelbar vor der Dispergierung durch Vereinigen einer wässrigen Lösung eines Alkalipyrophosphats mit mindestens der stöchiometrisch erforderlichen Menge eines Magnesiumsalzes hergestellt, wobei das Magnesiumsalz in fester Form oder wässriger Lösung vorliegen kann. In einer bevorzugten Ausführungsform wird das Magnesiumpyrophosphat durch Vereinigung wässriger Lösungen von Natriumpyrophosphat (Na₄P₂O₇) und Magnesiumsulfat (MgSO₄x7H₂O) hergestellt.

Die hochdispersen Kieselsäuren können als feine, feste Teilchen in Wasser dispergiert werden. Es ist aber auch möglich, sogenannte kolloidale Dispersionen von Kieselsäure in Wasser zu verwenden. Die kolloidalen Dispersionen sind alkalische, wäßrige Mischungen von Kieselsäure. Im alkalischen pH-Bereich sind die Partikel gequollen und in Wasser stabil. Für eine Verwendung dieser Dispersionen als Pickering-System ist es vorteilhaft, wenn der pH-Wert während der Öl-in-Wasser Emulsion mit einer Säure auf pH 2 bis 7 eingestellt wird.

Die anorganischen Schutzkolloide werden in der Regel in Mengen von 0,5 bis 15 Gew.-%, bezogen auf die Wasserphase, eingesetzt.

Im allgemeinen werden die organischen neutralen Schutzkolloide in Mengen von 0,1 bis 15 Gew.-%, vorzugsweise von 0,5 bis 10 Gew.-% eingesetzt, bezogen auf die Wasserphase.

Man wählt die Dispergierbedingungen zur Herstellung der stabilen Öl-in-Wasser Emulsion in an sich bekannter Weise so, dass die Öltröpfchen die Größe der gewünschten Mikrokapseln haben.

Die erhaltenen wässrigen Mikrokapseldispersionen können direkt als Wärmeträgerflüssigkeit eingesetzt werden. Unter dem Begriff Wärmeträgerfiüssigkeit sind im Rahmen dieser Anmeldung sowohl Flüssigkeiten für den Wärmetransport als auch Flüssigkeiten für den Kältetransport, also Kühlflüssigkeiten, gemeint. Das Prinzip der Übertragung von Wärmeenergie ist in beiden Fällen gleich und unterscheidet sich lediglich in der Übertragungsrichtung.

Solche Wärmeträgerflüssigkeiten werden erfindungsgemäß in einem System eingesetzt, umfassend einen Wärme aufnehmenden Teil und einen die Wärme abgebenden Teil zwischen denen die Wärmeträgerflüssigkeit im Kreis geführt wird und gegebenenfalls eine Pumpe zum Transport der Wärmeträgerflüssigkeit. Die Wärmeträgerflüssigkeit wird dabei dicht an der Wärmequelle vorbeigeführt, um eine möglichst schnelle Wärmeaufnahme und damit Wärmeabfuhr zu erreichen. Weiter geht der Kreislauf zum Wärme abgebenden Teil, wo diesmal die Wärmeabgabe an den kühleren Wärmeabnehmer erfolgt. In einem solchen Wärmetauscherkreislauf kann sich die Wärmeträgerflüssigkeit allein durch Konvektion bewegen. Bevorzugt setzt man wenigstens eine Pumpe ein, auch um eine rasche Energieabfuhr oder einen schnelleren Wärmeaustausch zwischen der Wärmequelle und dem Verbraucher zu gewährleisten. Steuerungsmöglichkeiten für einen maximalen Wärmetransport und Wärmeübertrag sind die Geschwindigkeit der Wärmeträgerflüssigkeit, die Wahl und damit die Wärmekapazität und die Menge der jeweiligen Latentwärmespeichermaterialien und eine möglichst geringe Viskosität der Wärmeträgerflüssigkeit während sie in Bewegung ist. Bei der Auswahl der Latentwärmespeichermaterialien ist zu beachten, dass die Temperatur der Wärmequelle oberhalb des Schmelzpunktes der Wärmeträgerflüssigkeit und die Temperatur des Wärmeabnehmers unterhalb ihres Erstarrungspunktes ist. Schmelzpunkt und Erstarrungspunkt sind dabei nicht zwingend gleich, da es, wie bereits oben erwähnt, auch zu Gefrierpunktserniedrigungen kommen kann.

Die Arten und Funktionsweisen derartiger dynamischer Systeme sind dem Fachmann hinlänglich bekannt, z.B. aus Ullmanns Encyclopedia of Industrial Chemistry, 5.ed on CD-Rom, "Heat Exchange". Sie werden beispielsweise in Heiz- und Kühlsystemen für Gebäude, Heiz- und Kühlsystemen für Autos, in Solaranlagen, in Kühl- und Gefriergeräten, als industrielle Wärmetauscher, als "personal comfort systems", und für Mikroklima Heizungs- und Kühlsysteme verwendet.

Die erfindungsgemäßen Wärmeträgerflüssigkeiten können ferner in einem statischen System eingesetzt werden. Solche Systeme werden beispielsweise in der US 5,007,478 beschrieben, deren Ausführungen von dieser Anmeldung mit umfasst sein sollen. Eine Kühlung mittels eines statischen Systems wird beispielsweise bei elektronischen Bauteilen und bei Computern eingesetzt, um deren Wärme abzuführen. Die Wärmeträgerflüssigkeit ist dabei in einen Behälter eingeschlossen. Der Energieaustausch erfolgt auch hier über einen Wärmeaustauscher, der mit dem Behälter verbunden ist oder über einen Wärmeaustauscher im Behälter und einfach über die Behälterfläche selbst. Hier nehmen sie kurzfristige Energiespitzen auf oder sorgen für einen Temperaturausgleich über längere Zeiträume.

Die Mikrokapseldispersionen zeigen hervorragende mechanische Eigenschaften. Sie sind auch unter den Pumpbedingungen stabil. Ferner weisen sie eine gute Hydrolysestabilität auf.

Die nachfolgenden Beispiele sollen die Erfindung näher erläutern. Bei den Prozentangaben handelt es sich, sofern nicht anders angegeben, um Gewichtsprozent.

### Beispiel 1:

### Wasserphase

| | |
|---|---|
| 572 g | Wasser |
| 80 g | einer 50%igen kolloidalen Dispersion von SiO₂ in Wasser bei pH 9,3 (mittlere Teilchengröße 108,6 nm, Z-Mittelwert nach Lichtstreuung) |
| 2,1 g | einer 2,5%igen, wässrigen Natriumnitritlösung |
| 20 g | einer 1 %igen, wässrigen Methylcelluloselösung (Viskosität 15000 mPas bei 2% in Wasser) |

### Ölphase

| | |
|---|---|
| 440 g | n-Tetradecan |
| 9 g | Paraffinwachs 68-72°C |
| 77 g | Methylmethacrylat |
| 33 g | Butandioldiacrylat |
| 0,76 g | Ethylhexylthioglykolat |
| 1,35 g | t-Butylperpivalat |

| | |
|---|---|
| Zulauf 1: 1,09 g t-Butylhydroperoxid, 70%ig in Wasser Zulauf 2: 0,34 g Ascorbinsäure, 0,024 g NaOH, 56 g H₂O | |

Bei Raumtemperatur wurde die obige Wasserphase vorgelegt und mit 3 g 10% iger Salpetersäure auf pH 4 gestellt. Nach Zugabe der Ölphase wurde mit einem schnellaufenden Dissolverrührer bei 4800 Upm dispergiert. Nach 40 Minuten Dispergierung wurde eine stabile Emulsion der Teilchengröße 1 bis 9 µm Durchmesser erhalten. Die Emulsion wurde unter Rühren mit einem Ankerrührer in 40 Minuten auf 56°C aufgeheizt, innerhalb von weiteren 20 Minuten auf 58°C, innerhalb von weiteren 60 Minuten auf 71 °C und innerhalb von weiteren 60 Minuten auf 85°C aufgeheizt. Die entstandene Mikrokapseldispersion wurde unter Rühren auf 70°C gekühlt und der Zulauf 1 dazugegeben. Der Zulauf 2 wurde unter Rühren bei 70°C über 80 Minuten dosiert zugegeben. Anschließend wurde abgekühlt. Die entstandene Mikrokapseldispersion besaß einen Feststoffgehalt von 47,2 % und eine mittlere Teilchengröße von 5,8 µm (Volumenmittelwert, gemessen mittels Fraunhofer-Beugung).

Bei Verdünnen mit Wasser auf ca. 30% Feststoffgehalt wies die Dispersion eine Viskosität von weniger als 10 mPas auf und konnte in einem Wärmekreislauf mit 2 Doppelrohrwärmetauschern umgepumpt werden.

### Beispiel 2:

### Wasserphase

| | |
|---|---|
| 333 g | Wasser |
| 188 g | einer 10%igen wässrigen Lösung von Polyvinylalkohol (88% verseift, mittleres Molekulargewicht 128.000) |

### Ölphase

| | |
|---|---|
| 440 g | Paraffin 62-64°C |
| 56,1 g | Methylmethacrylat |
| 18,7 g | Butandioldiacrylat |
| 0,76 g | Ethylhexylthioglykolat |
| 0,92 g | t-Butylperpivalat |

| | |
|---|---|
| Zulauf 1: 1,09 g t-Butylhydroperoxid, 70%ig in Wasser Zulauf 2: 0,34 g Ascorbinsäure, 56 g H₂O | |

Bei Raumtemperatur wurde die obige Wasserphase vorgelegt. Nach Zugabe der Ölphase wurde mit einem schnellaufenden Dissolverrührer bei 4000 Upm und 70°C dispergiert. Nach 20 Minuten Dispergierung wurde eine stabile Emulsion der Teilchengröße 1 bis 8 µm Durchmesser erhalten. Die Emulsion wurde unter Rühren mit einem Ankerrührer für eine Stunde bei 70°C gehalten und dann innerhalb von 60 Minuten auf 85°C, aufgeheizt. In die entstandene Mikrokapseldispersion wurde unter Rühren bei 85°C der Zulauf 1 dazugegeben. Der Zulauf 2 wurde unter Rühren über 80 Minuten dosiert zugegeben. Ab Beginn der Zugabe des Zulaufs 1 wurde der Ansatz über 90 Minuten auf Raumtemperatur abgekühlt. Die entstandene Mikrokapseldispersion besaß einen Feststoffgehalt von 49,5 % und eine mittlere Teilchengröße von 4,9 µm (Volumenmittelwert, gemessen mittels Fraunhofer-Beugung).

Bei Verdünnen mit Wasser auf ca. 30% Feststoffgehalt wies die Dispersion eine Viskosität von weniger als 10 mPas auf und konnte in einem Wärmekreislauf mit 2 Doppelrohrwärmetauschern umgepumpt werden.

## Patentansprüche

1. Verwendung von wässrigen Mikrokapseldispersionen mit Latentwärmespeichermaterialien als Kapselkern und einem Polymer als Schale, die erhältlich sind durch Erwärmen einer Öl-in-Wasser-Emulsion, in der die Monomere, Radikalstarter und die Latentwärmespeichermaterialien als disperse Phase vorliegen, wobei die Monomermischung
- 30 bis 95 Gew.-%, bezogen auf das Gesamtgewicht der Monomeren, eines oder mehrerer Monomere I ausgewählt unter den C₁-C₂₄-Alkylestem der Acryl- und Methacrylsäure, Methacrylsäure und Methacrylnitril,
- 5 bis 60 Gew.-%, bezogen auf das Gesamtgewicht der Monomeren, eines bi- oder polyfunktionellen Monomeren II, welches in Wasser nicht löslich oder schwer löslich ist und
- 0 bis 40 Gew.-%, bezogen auf das Gesamtgewicht der Monomeren, sonstige Monomere III enthält,
als Wärmeträgerflüssigkeiten.

2. Verwendung von wässrigen Mikrokapseldispersionen nach Anspruch 1, **dadurch gekennzeichnet, dass** die mittlere Teilchengröße der Mikrokapseln 0,5 bis 100 µm beträgt.

3. Verwendung von wässrigen Mikrokapseldispersionen nach Anspruch 1 oder 2, **dadurch gekennzeichnet, dass** die Latentwärmespeichermaterialien lipophile Substanzen sind, die ihren fest/flüssig Phasenübergang im Temperaturbereich von -20 bis 120°C haben.

4. Verwendung von wässrigen Mikrokapseldispersionen nach den Ansprüchen 1 bis 3, **dadurch gekennzeichnet, dass** das Polymer ein hochvernetztes Methacrylsäureesterpolymer ist.

5. Verwendung von wässrigen Mikrokapseldispersionen nach den Ansprüchen 1 bis 4, **dadurch gekennzeichnet, dass** die Öl-in-Wasser-Emulsion anorganische feste Teilchen einer mittleren Größe von 0,005 bis 1 µm enthält.

6. Verwendung von wässrigen Mikrokapseldispersionen nach den Ansprüchen 1 bis 5 als Wärmeträgerflüssigkeit in einem System umfassend einen Wärme-aufnehmenden Teil und einen die Wärme abgebenden Teil, zwischen denen die Wärmeträgerflüssigkeit im Kreis geführt wird, und gegebenenfalls eine Pumpe zum Transport der Wärmeträgerflüssigkeit.

7. Verwendung von wässrigen Mikrokapseldispersionen nach den Ansprüchen 1 bis 5 als Wärmeträgerflüssigkeit in einem statischen System.

8. Verwendung von wässrigen Mikrokapseldispersionen nach den Ansprüchen 1 bis 7 als Wärmeträgerflüssigkeit, in Systemen ausgewählt aus der Gruppe aus Heiz- und Kühlsystem für Gebäude, Heiz- und Kühlsystem für Autos, Solaranlagen, Kühl- und Gefriergeräte, industrielle Wärmetauscher, Kühlung für Computer und Elektronik, personal comfort systems, und Mikroklima Heizungs- und Kühlsysteme.

## Claims

1. The use of aqueous microcapsule dispersions with latent heat storage materials as capsule core and a polymer as shell, which are obtainable by heating an oil-in-water emulsion in which the monomers, free radical initiators and the latent heat storage materials are present as a disperse phase, where the monomer mixture comprises
- 30 to 95% by weight, based on the total weigtht of the monomers, of one or more monomers I chosen from C₁-C₂₄-alkyl esters of acrylic acid and methacrylic acid, methacrylic acid and methacrylonitrile,
- 5 to 60% by weight, based on the total weight of the monomers, of a bi- or polyfunctional monomer II which is insoluble or sparingly soluble in water and
- 0 to 40% by weight, based on the total weight of the monomers, of other monomers III,
as heat transfer liquids,

2. The use of aqueous microcapsule dispersions according to clam 1, wherein the average particle size of the microcapsules is 0.5 to 100 µm.

3. The use of aqueous microcapsule dispersions according to claim 1 or 2, wherein the latent heat storage materials are lipophilic substances which have their solid/liquid phase transition in the temperature range from -20 to 120°C.

4. The use of aqueous microcapsule dispersions according to claims 1 to 3, wherein the polymer is a highly crosslinked methacrylic ester polymer.

5. The use of aqueous microcapsule dispersions according to claims 1 to 4, wherein the oil-in-water emulsion comprises inorganic solid particles with an average size of from 0.005 to 1 µm.

6. The use of aqueous microcapsule dispersions according to claims 1 to 5 as heat transfer liquid in a system comprising a heat-absorbing section and a section which gives off the heat, between which the heat transfer liquid is circulated, and if appropriate a pump to transport the heat transfer liquid.

7. The use of aqueous microcapsule dispersions according to claims 1 to 5 as heat transfer liquid in a static system.

8. The use of aqueous microcapsule dispersions according to claims 1 to 7 as heat transfer in in systems chosen from the group consisting of heating and cooling systems for buildings, heating and cooling systems for automobiles, solar installations, chilling and freezing devices, industrial heat exchangers, cooling for computers and electronics, personal comfort systems, and microclimate heating and cooling systems.

## Revendications

1. Utilisation de dispersions aqueuses de microcapsules avec des matériaux latents d'accumulation de la chaleur comme noyau de capsule et un polymère comme coquille, qui peuvent être obtenues par chauffage d'une émulsion huile-dans-eau, dans laquelle les monomères, des initiateurs de radicaux et les matériaux latents d'accumulation de la chaleur se trouvent sous forme de phase dispersée, où le mélange de monomères
30 à 95% en poids, par rapport au poids total des monomères, d'un ou de plusieurs monomères I, choisis parmi les esters C₁-C₂₄-alkyliques de l'acide acrylique et méthacrylique, l'acide méthacrylique et le méthacrylonitrile,
5 à 60% en poids, par rapport au poids total des monomères, d'un monomère II difonctionnel ou polyfonctionnel, qui n'est pas soluble ou qui est peu soluble dans l'eau et
0 à 40% en poids, par rapport au poids total des monomères, d'autres monomères III,
comme liquides caloporteurs.

2. Utilisation de dispersions aqueuses de microcapsules selon la revendication 1, **caractérisée en ce que** la grosseur moyenne des particules des microcapsules est de 0,5 à 100 µm.

3. Utilisation de dispersions aqueuses de microcapsules selon la revendication 1 ou 2, **caractérisée en ce que** les matériaux latents d'accumulation de chaleur sont des substances lipophiles, qui présentent leur transfert de phases solide/liquide dans la plage de température de -20 à 120°C.

4. Utilisation de dispersions aqueuses de microcapsules selon les revendications 1 à 3, **caractérisée en ce que** le polymère est un polymère d'ester de l'acide méthacrylique hautement réticulé.

5. Utilisation de dispersions aqueuses de microcapsules selon les revendications 1 à 4, **caractérisée en ce que** l'émulsion huile-dans-eau contient des particules solides inorganiques présentant une grosseur moyenne de 0, 005 à 1 µm.

6. Utilisation de dispersions aqueuses de microapsules selon les revendications 1 à 5 comme liquide caloporteur dans un système comprenant partie absorbant la chaleur et une partie dégageant la chaleur, entre lesquelles le liquide caloporteur est guidé en circulation, et le cas échéant une pompe pour le transport du liquide caloporteur.

7. Utilisation de dispersions aqueuses de microcapsules selon les revendications 1 à 5 comme liquide caloporteur dans un système statique.

8. Utilisation de dispersions aqueuses de microcapsules selon les revendications 1 à 7 comme liquide caloporteur, dans des systèmes choisis dans le groupe formé par les systèmes de chauffage et de refroidissement pour bâtiments, les systèmes de chauffage et de refroidissement pour voitures, les installations solaires, les appareils de refroidissement et de congélation, les échangeurs de chaleur industriels, le refroidissement pour ordinateurs et l'électronique, les systèmes de confort personnel et les systèmes de chauffage et de refroidissement microclimatiques.
